# EUROPEAN PATENT SPECIFICATION

(11) **EP 3 857 978 B1**
(45) Date of publication and mention of the grant of the patent: **19.04.2023**
(21) Application number: 19758746.2
(22) Date of filing: 28.08.2019
(51) Int. Cl.: H04W 48/18, H04W 28/08, H04W 60/04

(54) **NETWORK SLICE REDIRECTION MANAGEMENT**
VERWALTUNG DER NETZWERKSCHICHTUMLEITUNG
GESTION DE REDIRECTION D'UNE TRANCHE DE RESEAU

(30) Priority: 27.09.2018 EP 18197315
(43) Date of publication of application: 04.08.2021
(73) Proprietor: British Telecommunications public limited company, London E1 8EE (GB)
(72) Inventor: CORSTON-PETRIE, Andrew, London EC4V 5BT (GB); BROWN, Ruth, London EC4V 5BT (GB); HART, Jonathan, London EC4V 5BT (GB)
(74) Representative: British Telecommunications public limited company Intellectual Property Department
(86) International application number: PCT/EP2019/072935
(87) International publication number: WO 2020/064250

(56) References cited:
- WO-A1-2017/123277
- WO-A1-2017/143047
- WO-A1-2017/177364

## Description

### Field of Invention

The present invention relates to a method of, a telecommunications network for, and a medium for managing network traffic, and in particular to managing traffic amongst network slices of the telecommunications network.

### Background

Network slicing is a method of virtualising a network so as to create multiple logical networks within a single physical network. This is typically undertaken to offer differentiated service models, which might include varying performance and/or stability characteristics within a network, and it is supported by the fact that network slices are isolated from one another other during operation. As a result, high traffic or a large number of users on one slice is unable negatively to affect other network slices.

For example, network slices may be configured to provide specialised functions, including: exclusively serving emergency services (which demands, at least, reliability); enhanced Mobile Broadband (eMBB); and Massive Machine Type Communications (MMTC).

A network will adapt network slices to suit network conditions and to optimise utilisation of individual network slices. To ensure constant availability of resources as network slices' resources are consumed, scaling occurs. If a network slice reaches a threshold utilisation the creation of additional slice resources may be triggered so as to cope with high network loads; this is typically achieved by 'scaling up' or by 'scaling out' a network slice.

For example, WO2017177364 relates to communication over a network comprising network slices. WO2017143047 describes a network control node that may determine slice information and may then select a network slice. WO2017123277 discloses a to network slice selector (NSS). The allocation of new processing resources to a network slice (via scaling) can take a matter of minutes, and typically around 2 to 10 minutes. However, during such scaling new users may be prevented from joining the slice or potential network congestion may be experienced by users.

It is an aim of the present invention at least to alleviate some of the aforementioned problems.

### Summary of Invention

According to a first aspect of the present invention, there is provided a method of managing network traffic in a telecommunications network according to claim 1.

As used herein, the term "is suitable" in reference to identifying the second network slice for processing the network communication, preferably connotes a network slice that is currently suitable or is expected to become suitable.

As used herein, the term "allocated" with reference to the allocation of the UE to the first network slice, preferably connotes: the identification or selection of the first network slice as a suitable network slice with which to register the UE, but where the UE has not yet - but is to be - registered with the first network slice; where the UE is registering with the first network slice; and/or where the UE is already registered with the first network slice.

Optionally, the network communication is: a data packet; a part thereof; a plurality of data packets; and/or a data session. The network communication may be an attach request or may follow an attach request.

Preferably, the network communication is redirected to the second network slice before being received by the first network slice, and more preferably, before any part of the network communication is received and/or processed by the first network slice or before all of the network communication is received and/or processed by the first network slice.

Preferably, the method further comprises the steps of identifying the second network slice in response to identifying a lack of suitability of the first network slice.

Preferably, the first (and/or second) network slice is suitable to process the network communication if the first (and/or second) network slice has, or will have, sufficient excess available processing resources to process the network communication. The method may therefore further comprise the step of determining the processing resources available on the first and/or second network slice/s.

Preferably, the first (and/or second) network slice is suitable to process the network communication if the first (and/or second) network slice has, or will have, a number of concurrent users that is below a threshold. The method may therefore further comprise the step of determining the number of concurrent users on the first and/or second network slice/s.

Preferably, the first (and/or second) network slice is suitable to process the network communication if the first (and/or second) network slice has a network performance that is, or will be, beyond (or above) a threshold. The method may therefore further comprise the step of determining the network performance of the first and/or second network slice/s. The network performance may be determined by measuring: latency, jitter, bandwidth, packet error rate and/or Round-Trip Time (RTT). The network performance threshold may be dependent on the type of network communication.

Preferably, the first (and/or second) network slice is suitable to process the network communication if an absence of any ongoing and/or future reconfiguration associated with the first (and/or second) network slice is identified. The method may therefore further comprise the step of identifying ongoing and/or (scheduled) future reconfiguration of the first and/or second network slice/s. Optionally, the reconfiguration is a: re-starting; scaling (up, down and/or out); closing; and/or opening of the first network slice.

Optionally, identifying the first (and/or second) network slice as being unsuitable to process the network communication triggers the first network slice to reconfigure.

Preferably, identifying the second network slice is performed in response to identifying the first network slice as being unsuitable.

Preferably, the network communication would cause, if processed by the first network slice, or does cause, the first network slice to become unsuitable for processing the network communication. Optionally, the registration of the UE to the first network slice would cause the first network slice to become unsuitable for processing the network communication. In which case, the network communication may cause re-configuration of the first network slice.

Preferably, the first and the second network slices remain (optionally, continuously) operational during, at least, the steps of monitoring, identifying and redirecting.

Preferably, the network communication is redirected to at least one function, but not to all functions, of the second network slice. Optionally, function/s of first network slice that correspond to those of the second network slice to which the network communication is/are redirected are bypassed in first network slice. Optionally, the network communication is redirected only to one function of the second network slice. Preferably, the network communication is redirected to a User Plane Function (UPF) of the second network slice. Optionally, a UPF of the first network slice is bypassed.

Preferably, the method further comprises the steps of: continuing to monitor the suitability of the first network slice to process the network communication after redirecting the network communication to the second network slice; and in response to identifying that the first network slice is suitable to process the network communication, ceasing to redirect the network communication to the second network slice (thereby to allow the first network slice to process the network communication).

Preferably, the second network slice has substantially the same configuration and/or network performance as the first network slice, when the first network slice is suitable for processing the network communication. The second network slice may therefore be configured for the same purpose as the first network slice, wherein the purposes may be a specialised function, such as eMBB, emergency services communications, Ultra Reliable, Low Latency Communications (URLLCs), etc. Optionally, the second network slice is a network slice that has the closest matching configuration and/or network performance to that of the first network slice. Optionally, the second network slice is identified in dependence on the amount of excess processing resources available and similarity of configuration to the first network slice.

Preferably, the second network slice is configured to process the network communication in a manner that is no worse than the first network slice, when the first network slice is suitable for processing the network communication. More preferably, this is when: network efficiency (cost, or other resource); network performance; Quality of Service; and/or Quality of Experience associated with processing the network communication are no worse.

Optionally, the first network slice is a network slice that is most preferred by the telecommunications network for processing the network communication, when the first network slice is suitable for handling said network communication. Optionally, the first network slice is a network slice that is preferred over the second network slice by the telecommunications network for processing the network communication, when the first network slice is suitable for handling said network communication. Preference of a network slice by the network may be dependent on: network efficiency (cost, or other resource); network performance metrics; Quality of Service; and/or Quality of Experience.

Preferably, identifying the second network slice further comprises the steps of: measuring network performance of the second network slice; and assessing whether the network performance surpasses a threshold. Alternatively, the second network slice may be preselected.

A single given network slice of the telecommunications network may be (simultaneously or sequentially) the first network slice in a first iteration of the method and the second network slice in a second iteration of the method. A network communication may therefore be redirected to a single network slice from another network slice and, simultaneously, another network communication may be redirected from said single network slice to yet another network slice. Optionally, redirecting the network communication to the second network slice is implemented in a core of the telecommunications network, and more preferably, only in the core. Preferably, the network communication has yet to be received by a core of the telecommunications network.

The telecommunications network may be a mobile cellular network.

According to another aspect of the invention, there is provided a telecommunications network for managing network traffic for a User Equipment according to claim 13.

According to yet another aspect of the invention, there is provided a computer-readable storage medium according to claim 14.

The invention extends to any novel aspects or features described and/or illustrated herein. The invention extends to methods and/or apparatus substantially as herein described and/or as illustrated with reference to the accompanying drawings.

Any apparatus feature described herein may be provided, additionally or alternatively, as a feature of a method/process, and vice versa. As used herein, features that are recited in the form of means plus function may, additionally or alternatively, be defined according to their corresponding structure, such as a suitably programmed processing unit.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

The word 'or' can be interpreted in the exclusive or inclusive sense, unless otherwise stated. Furthermore, features implemented in hardware may generally be implemented in software, and vice versa. Any reference to software and hardware features herein should be construed accordingly.

The invention extends to a method of managing network traffic and a telecommunications network as described herein and/or substantially as illustrated with reference to the accompanying drawings. The present invention is now described, purely by way of example, with reference to the accompanying diagrammatic drawings, in which:
Figure 1 shows a schematic diagram of an exemplary telecommunications network;
Figure 2 shows a portion of the network; and
Figures 3, 4 and 5 outline processes for managing network slices within the network.

### Specific Description

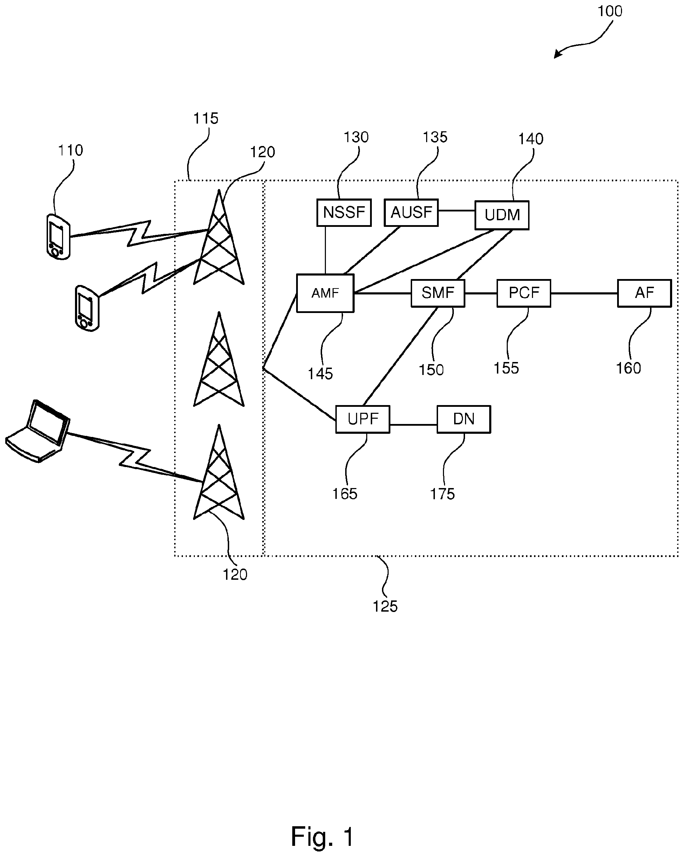

Figure 1 is a schematic diagram of an exemplary telecommunications network 100.

The network 100 is shown as a mobile cellular network comprising User Equipment (UE) 110 *(e.g.* in the form of a mobile cellular device, laptop or tablet) that is configured to utilise the telecommunications network 100 by accessing a Radio Access Network (RAN) 115, as provided by RAN access points 120 *(e.g.* in the form of a macro-, micro-, pico- or femto-cell site). In turn, the RAN access points 120 are connected to a core network 125.

The network 100 operates in accordance with, for example, 5G technology. Accordingly, in this example, the core network 125 comprises the following functional components:
- Network Slice Selection Function (NSSF) 130;
- AUthentication Server Function (AUSF) 135;
- Unified Data Management (UDM) 140;
- Access and mobility Management Function (AMF) 145;
- Session Management Function (SMF) 150;
- Policy Control function (PCF) 155;
- Application Function (AF) 160;
- User Plane Function (UPF) 165; and
- Data Network (DN) 175.

By means of the aforementioned functional components of the core network 125, the network 100 provides and manages a plurality of network slices. In particular, the NSSF 130 is configured to identify and to select a suitable network slice for the UE 110, and then to communicate that selection in order to help ensure that the UE is registered with the selected network slice.

The aforementioned functional components are configured to redirect network traffic internally amongst network slices when a given network slice is temporarily unsuitable for processing a given network communication.

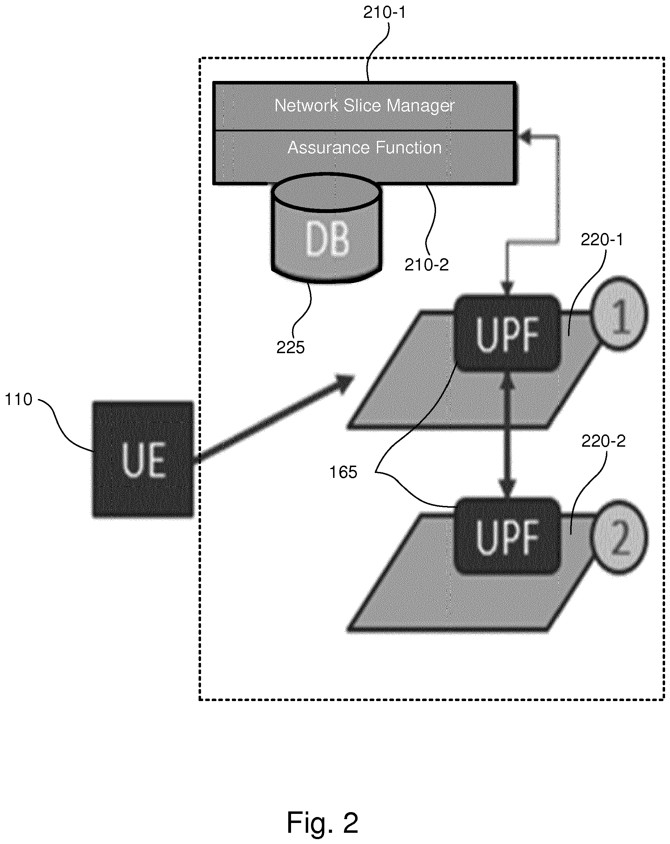

In more detail, Figure 2 illustrates the components of the core network 125 that are responsible for redirecting network traffic amongst network slices.

Within the network core 125, there is provided a Network Slice Manager (NSM) 210-1, which is in communication with the User Plane Function (UPF) 165 for network slices 220. The NSM triggers reconfiguration of the network slices 220, and in particular triggers redirection of network communications amongst the network slices 220. A network slice orchestrator (not shown) effects the (re-)configuration *(e.g.* triggered by the NSM) of the network slices 220 so as to manage the processing resources of the network slices, and therefore to fulfil the demands of services utilising the network slices.

As part of the NSM 210-1, an Assurance Function (AsFn) 210-2 is provided that ascertains the performance of network slices 220; that is, whether individual network slices are operating and are performing sufficiently. For example, the AsFn measures: processing unit consumption; number of concurrent users (*e*.*g*. the number of UEs that are simultaneously allocated to a given network slice); and/or performance metrics (including, for example, latency, bandwidth, jitter, error rate and/or round-trip delay time).

In the normal course of operation of the network, the UE is allocated to, and registered with, a primary network slice 220-1. The primary network slice 220-1 is the most preferred network slice, when performing as required, for processing network communications from a given UE, and it is selected, not least, in dependence on: a prescribed selection; the type of UE; the type of network communication from the UE; time; and/or the service agreement between the mobile network operator of the core network 125 and the UE.

The NSM 210-1 receives from - and/or retrieves from a database 230 populated by - the AsFn 210-2 data regarding the operation and performance of the primary network slice 220-1. If the primary network slice 220-1 is not suitable for processing a network communication from the UE, then network traffic from the UE is redirected to an alternative - partner - network slice 220-2; this occurs whilst the UE is registering with the primary network slice 220-1 and/or whilst the UE remains registered with the primary network slice 220-1.

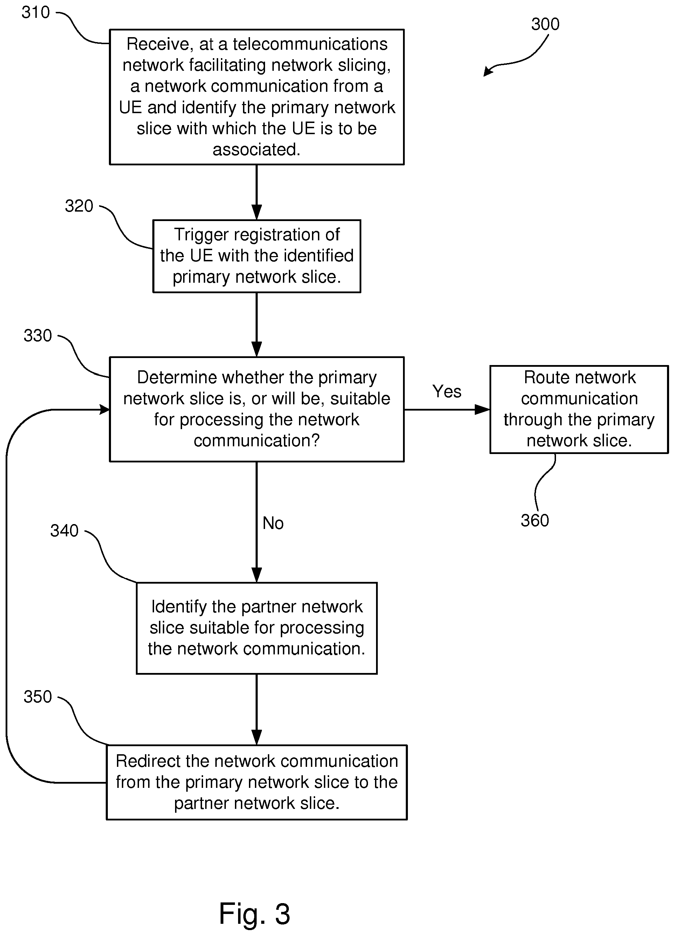

Figure 3, outlines in more detail a process 300 by which a network communication is redirected to a partner slice. In a first step 310, a network communication from the UE 110 is received by the network 100. The network communication is, for example, an attach request for attaching to the network. Once the (or part of the) network communication has been received by the network, the NSSF 130 identifies a primary network slice onto which to allocate the UE. Registration of the UE with the primary network slice is subsequently triggered, and registration follows 320.

At a given moment, the identified primary network slice 220-1 may not be suitable for processing a network communication from the UE. This may be for a variety of reasons, including: an existing processing capacity breach; an insufficiency of excess available processing resources to process the network communication; downtime in the network slice; scaling (out, up and/or down) of the primary network slice in order to increase processing resources of the network slice; creation or restarting of the primary network slice without it yet fully operating; removal of the primary network slice; and/or other reconfiguring of the primary network slice. Accordingly, a determination 330 is made whether the primary network slice is (or will be within an acceptable period of time, for example by the time that the UE is registered) suitable for processing the network communication from the UE 110; this is determined by the AsFn.

If it is ascertained that the primary network slice 220-1 is not operating or performing sufficiently *(e.g.* because it is scaling), this is communicated to the NSM 210-1 (*e.g.* from the AsFn, or by having the NSM access the database 230), which in step 340 triggers the NSSF to identify the partner network slice 220-2.

Once identified, and its suitability (current or expected) to handle the network communication from the UE 110 has been confirmed by the AsFn 210-2, the NSSF communicates the identity of the partner network slice to the NSM, which subsequently instructs the UPF 165 internally to redirect the network communication associated with the UE 110 from the primary network slice to the partner network slice 350.

In effect, the NSM thereby prevents the primary network slice 220-1 from having to process the network communication, and the partner network slice lends its processing resources to assist the primary network slice. As a result, the primary network slice is protected (for example, if it is overloaded and/or scaling) and prevents or helps reduce network congestion as experienced by the UE 100 and/or by existing UEs already registered with the primary network slice 220-1.

After the network communication has been redirected to the partner network slice, the process then reiterates to evaluate anew whether the primary network slice is now (or now will be) suitable for processing the (ongoing) network communication 330. If so, then the NSM abolishes the redirection of the network communication and instead routes - as in the normal course of events - the network communication through the primary network slice 360.

It will be appreciated that the partner network slice is available to change with each loop of the process 300, since a previously-identified partner network slice may no longer be suitable to process a subsequent network communication. Accordingly, a primary network slice may become a partner network slice, and vice versa, over different iterations of process 300.

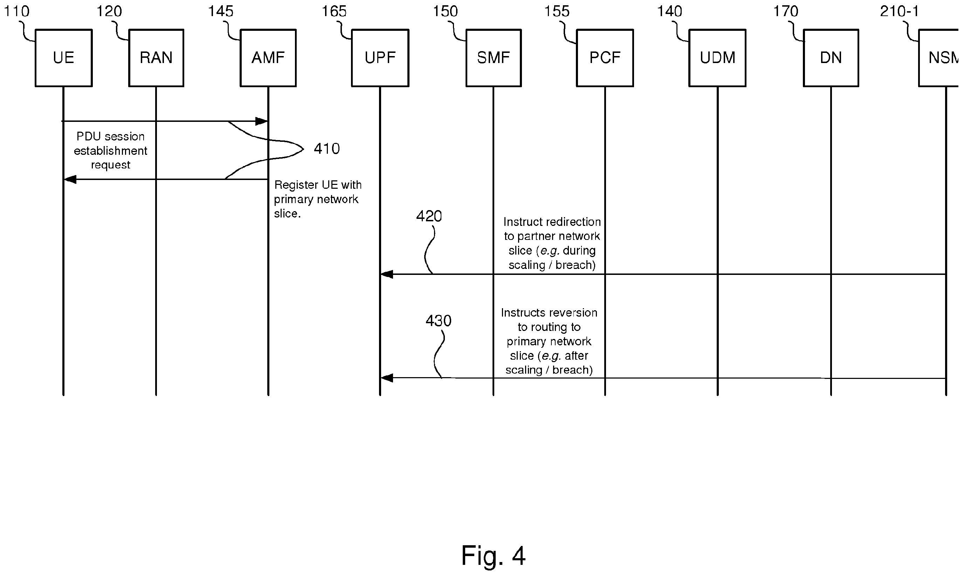

Figure 4 is a diagram illustrating signalling between the UE and the components of the network 100 so as to perform the process 300 as show in, and as described with reference to, Figure 3.

In a first signalling process 410, the UE 100 sends a network communication to the network 100 via the RAN 120. The AMF 145 receives and processes the network communication in order to establish a connection with the UE; this is performed, for example as outlined in the 3rd Generation Partnership Project (3GGP) Technical Specification 23.502, version 15.2.0, section 4.3.2.2, the contents of which are hereby incorporated by reference.

Once the UE has registered with the network 100, and a Protocol Data Unit (PDU) session is established, the NSSF identifies the primary network slice, onto which the UE is registered. Where it is established (by the AsFn 210-2) that the primary network slice is not suitable for handling network communications from the UE, the NSM triggers the NSSF to identify the partner network slice and subsequently triggers the UPF 150 to redirect the network communication from the primary network slice to the partner network slice 420 (having been identified by the NSSF).

Once the AsFn identifies that the primary network slice is suitable for handling the network communication, the NSM triggers the UPF to cease the redirection so as to route the network communication, as normal, through the primary network slice 430.

Advantageously, and as best shown in Figure 4, the process of redirecting network communications amongst network slices is transparent to the UE; that is, the UE remains attached to the primary network slice, and so the process requires no further signalling with the UE, thereby reducing signalling overhead within the network (not least, network slice admission control signals between the RAN and the UE).

The effect of the redirection is to loan processing resources from one network slice to another; this can alternatively be achieved by directly reallocating processing resources between network slices (for example, as outlined in a co-pending patent application filed by this same applicant under Applicant's reference A33738, the contents of which are hereby incorporated by reference). However, redirection of a network communication is less complex to establish - and to revert from - than actual reallocation of processing resources between network slices. In addition, the effective loaning of processing resources by redirecting a network communication as outlined above is more resource-efficient than actual reallocation of processing resources amongst network slices, since only functional resources are 'loaned'; that is, only a UPF is 'loaned' rather than an entire network slice.

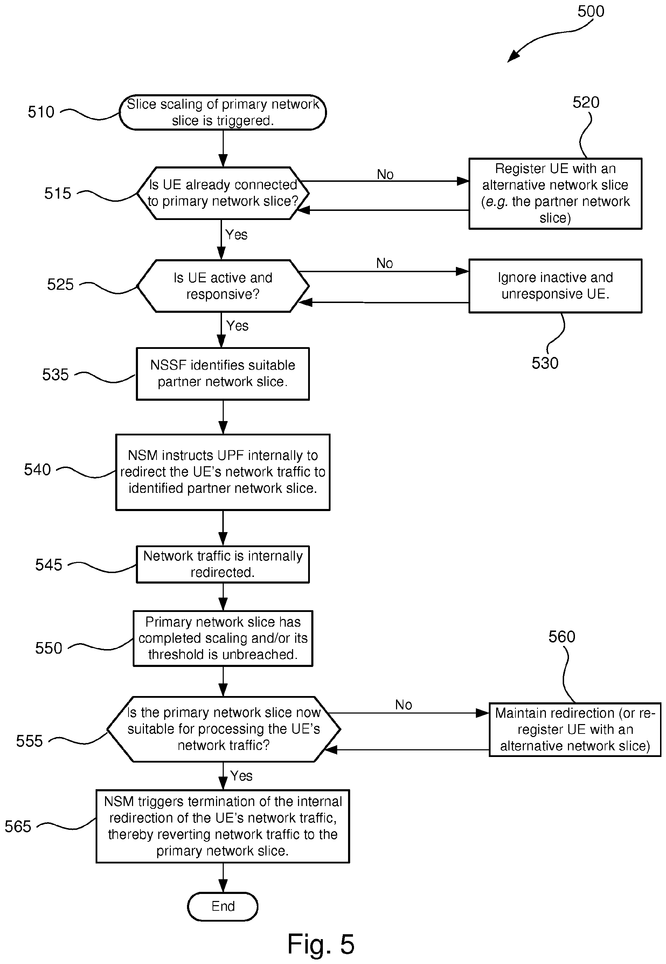

Figure 5 shows, in more detail, a process 500 by which the network communication from the UE is redirected to the partner network slice when the primary network slice is unsuitable because it is scaling.

In a first step, slice scaling (up, down or out) of the primary network slice is identified (responsively or anticipatorily) 510. The network 100 then queries whether the UE is already connected to the primary network slice 515. If so, the UE is allowed to remain on the primary network slice (in order to help reduce disruption to the scaling primary network slice), the network further queries whether the UE is active and responsive 525. If not, and the UE is a new UE, it is registered with an alternative network slice (which may be the partner network slice, for example as outlined in a co-pending patent application filed by this same applicant under Applicant's reference A33733, the contents of which are hereby incorporated by reference).

If the UE is already connected to the primary network slice, but if the UE is not active and responsive, for network efficiency, the UE is ignored 530, and query 525 is repeated to identify whether the UE subsequently becomes active (*e.g*. by using a UPF resource).

If the UE is active and responsive, the NSSF identifies a suitable partner network slice for the UE 535, and the NSM instructs the UPF internally to redirect the network communication of the UE to the identified partner network slice 540, and the redirection is subsequently established 545.

Steps 510 to 545 all occur whilst the primary network slice has been triggered to scale and/or is currently scaling. Once the primary network slice has scaled 550 (and/or the level of utilisation of the network slice decreases as a proportion of its total capacity), the network queries whether the primary network slice is suitable for handling the UE (as performed by the AsFn) 555. If not, the redirection remains until the UE is disconnected or de-registers 565 (or the UE is re-registered with an alternative network slice. If so, the NSM is informed of the suitability of the primary network slice (by the AsFn, and optionally the NSSF) and therefore triggers the UPF to terminate the redirection 565.

When identifying a partner network slice, the NSSF identifies a network slice that is a most appropriate alternative to the primary network slice; that is, a network slice having the same - or a substantially similar - configuration and performance, including in relation to: latency; jitter; bandwidth; availability of processing resources; Quality of Service; Service Level Agreement; type/specialisation of network slice (*e.g*. Ultra-Reliable Low-Latency Communications, Mobile Broadband and enhanced, and Massive Machine Type Communications); and services available on a given network slice (*e.g*. Voice-over-WiFi^{RTM} calling).

In order to maintain a minimum standard of service, rules governing the selection of the partner network slice are utilised, including restrictions that the partner network slice performs no worse than the primary network slice (when it is deemed to be operating as required, for example by the AsFn).

### Alternative and modifications

The network 100 shown in, and described with reference to, Figure 1, is a mobile cellular network. However, it will be appreciated that the aforementioned is available to be implemented as part of any network that utilises network slicing, and more generally as part of any network utilising virtualisation to segregate network resources, including fixed line, local area, and wide area networks. In such examples, the process of managing network resources as described above is performed by functional components of such networks that are analogous to those of the network 100.

In one alternative, the UPF 165 associated with the network slices 220 alerts the NSM 210-1 and/or the AsFn 210-2 when the first network slice is no longer suitable.

The identification of the partner network slice is available to be conducted at any stage in the processes described above, in particular: prior to the UE registering with the primary network slice; after the UE registers with the primary network slice; and/or once the primary network slice is deemed unsuitable for processing the network communication.

In one example, the partner network slice is identified for a specific primary network slice (and therefore applies to all UEs that would register with a given primary network slice). In another example, the partner network slice is identified for a specific UE (that is, on a 'per-UE' basis).

It will be appreciated that abolishing the redirection of the network communication to the primary network slice from the partner network slice is optional, and in certain circumstances it may be preferable to retain redirection, not least to reduce the processing overhead of implementing a further redirection.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of managing network traffic in a telecommunications network (100), the telecommunications network having a plurality of network slices, a controller (210-2), a processor (210-1) and a User Equipment (110),UE, wherein the UE is allocated to a first network slice (220-1) and the UE generates a network communication, the method comprising the steps of:
monitoring, by the processor, a suitability of the first network slice to process the network communication (330);
identifying, by the processor, a second network slice (220-2) that is suitable for processing the network communication (340); and
in response to identifying, by the processor, lack of suitability of the first network slice to process the network communication, redirecting, by the controller, the network communication to the second network slice (350) so as to process the network communication by means of the second network slice;
**characterised in that**:
said redirecting is performed whilst the UE remains allocated to the first network slice.

2. The method according to Claim 1, wherein the network communication is redirected to the second network slice (220-2) before being received by the first network slice (220-1).

3. The method according to Claim 1 or 2, wherein the step (340) of identifying the second network slice (220-2) is performed in response to identifying lack of suitability of the first network slice.

4. The method according to claim 3, wherein identifying the lack of suitability of the first network slice (220-1) to process the network communication triggers the first network slice to reconfigure.

5. The method according to any preceding claim, wherein the step of identifying the second network slice (220-2) is performed in response to identifying lack of suitability of the first network slice to process the network communication.

6. The method according to any preceding claim, wherein the network communication would cause, if processed by the first network slice (220-1), or does cause, the first network slice to become unsuitable for processing the network communication.

7. The method according to any preceding claim, wherein the first (220-1) and the second (220-2) network slices remain operational during, at least, the steps of monitoring, identifying and redirecting.

8. The method according to any preceding claim, wherein the network communication is redirected to at least one function, but not to all functions, of the second network slice (220-2).

9. The method according to Claim 8, wherein the network communication is redirected to a User Plane Function, UPF, of the second network slice (220-2).

10. The method according to any preceding claim, wherein the first network slice (220-1) is a network slice that is preferred by the telecommunications network (100) over the second network slice (220-2) for processing the network communication when the first network slice is suitable for handling the network communication.

11. The method according to any preceding claim, wherein identifying the second network slice (220-2) further comprises the steps of: measuring network performance of the second network slice; and assessing whether the network performance surpasses a threshold.

12. The method according to any preceding claim, wherein redirecting the network communication to the second network slice (220-2) is implemented in the core (125) of the telecommunications network (100).

13. A telecommunications network (100) for managing network traffic for a User Equipment (110), UE, the telecommunications network comprising:
a first network slice (220-1) and a second network slice (220-2), and the UE being allocated to the first network slice and the UE generates a network communication;
a processor (210-2) for monitoring a suitability of the first network slice to process the network communication and for identifying a second network slice that is suitable for processing the network communication; and
a controller (210-1) for redirecting the network communication to the second network slice so as to process the network communication by means of the second network slice in response to identifying, by the processor, lack of suitability of the first network slice to process the network communication;
**characterised in that**:
said controller is configured to perform said redirecting whilst the UE remains allocated to the first network slice.

14. A computer-readable storage medium comprising instructions that, when executed by a processor and a controller associated with a telecommunications network (100), causes the telecommunication network to perform the method according to any of Claims 1 to 12.

## Patentansprüche

1. Verfahren zur Handhabung von Netzwerkverkehr in einem Telekommunikationsnetzwerk (100), wobei das Telekommunikationsnetzwerk eine Mehrzahl von Netzwerk-Slices, eine Steuerung (210-2), einen Prozessor (210-1) und eine Benutzereinrichtung, UE, (110) aufweist, wobei die UE einem ersten Netzwerk-Slice (220-1) zugewiesen ist, und die UE eine Netzwerkkommunikation erzeugt, wobei das Verfahren die folgenden Schritte umfasst:
Überwachen einer Eignung des ersten Netzwerk-Slice, die Netzwerkkommunikation zu verarbeiten, durch den Prozessor (330);
Identifizieren eines zweiten Netzwerk-Slice (220-2), der zum Verarbeiten der Netzwerkkommunikation geeignet ist, durch den Prozessor (340); und
Umleiten der Netzwerkkommunikation durch die Steuerung zum zweiten Netzwerk-Slice (350), um die Netzwerkkommunikation mittels des zweiten Netzwerk-Slice zu verarbeiten, in Reaktion auf ein Identifizieren einer mangelnden Eignung des ersten Netzwerk-Slice, die Netzwerkkommunikation zu verarbeiten, durch den Prozessor;
**dadurch gekennzeichnet, dass**:
das Umleiten durchgeführt wird, während die UE dem ersten Netzwerk-Slice zugewiesen bleibt.

2. Verfahren nach Anspruch 1, wobei die Netzwerkkommunikation zum zweiten Netzwerk-Slice (220-2) umgeleitet wird, bevor sie durch den ersten Netzwerk-Slice (220-1) empfangen wird.

3. Verfahren nach Anspruch 1 oder 2, wobei der Schritt (340) des Identifizierens des zweiten Netzwerk-Slice (220-2) in Reaktion auf das Identifizieren der mangelnden Eignung des ersten Netzwerk-Slice ausgeführt wird.

4. Verfahren nach Anspruch 3, wobei das Identifizieren der mangelnden Eignung des ersten Netzwerk-Slice (220-1) zum Verarbeiten der Netzwerkkommunikation den ersten Netzwerk-Slice zum Rekonfigurieren veranlasst.

5. Verfahren nach einem der vorhergehenden Ansprüche, wobei der Schritt des Identifizierens des zweiten Netzwerk-Slice (220-2) in Reaktion auf das Identifizieren der mangelnden Eignung des ersten Netzwerk-Slice zum Verarbeiten der Netzwerkkommunikation ausgeführt wird.

6. Verfahren nach einem der vorhergehenden Ansprüche, wobei die Netzwerkkommunikation bei Verarbeitung durch den ersten Netzwerk-Slice (220-1) bewirken würde oder bewirkt, dass der erste Netzwerk-Slice zum Verarbeiten der Netzwerkkommunikation ungeeignet wird.

7. Verfahren nach einem der vorhergehenden Ansprüche, wobei der erste (220-1) und der zweite (220-2) Netzwerk-Slice zumindest während der Schritte des Überwachens, des Identifizierens und des Umleitens in Betrieb bleiben.

8. Verfahren nach einem der vorhergehenden Ansprüche, wobei die Netzwerkkommunikation zu mindestens einer Funktion, aber nicht zu allen Funktionen des zweiten Netzwerk-Slice (220-2) umgeleitet wird.

9. Verfahren nach Anspruch 1, wobei die Netzwerkkommunikation zu einer Benutzerebenen-Funktion, UPF, des zweiten Netzwerk-Slice (220-2) umgeleitet wird.

10. Verfahren nach einem der vorhergehenden Ansprüche, wobei der erste Netzwerk-Slice (220-1) ein Netzwerk-Slice ist, der vom Telekommunikationsnetzwerk (100) gegenüber dem zweiten Netzwerk-Slice (220-2) zum Verarbeiten der Netzwerkkommunikation bevorzugt wird, wenn der erste Netzwerk-Slice zum Handhaben der Netzwerkkommunikation geeignet ist.

11. Verfahren nach einem der vorhergehenden Ansprüche, wobei das Identifizieren des zweiten Netzwerk-Slice (220-2) ferner die folgenden Schritte umfasst: Messen der Netzwerkleistung des zweiten Netzwerk-Slice; und Beurteilen, ob die Netzwerkleistung eine Schwelle überschreitet.

12. Verfahren nach einem der vorhergehenden Ansprüche, wobei das Umleiten der Netzwerkkommunikation zum zweiten Netzwerk-Slice (220-2) im Kern (125) des Telekommunikationsnetzwerks (100) implementiert wird.

13. Telekommunikationsnetzwerk (100) zum Handhaben von Netzwerkverkehr für eine Benutzereinrichtung, UE, (110), wobei das Telekommunikationsnetzwerk umfasst:
einen ersten Netzwerk-Slice (220-1) und einen zweiten Netzwerk-Slice (220-2) und die UE, die dem ersten Netzwerk-Slice zugewiesen ist, wobei die UE eine Netzwerkkommunikation erzeugt;
einen Prozessor (210-2) zum Überwachen einer Eignung des ersten Netzwerk-Slice zum Verarbeiten der Netzwerkkommunikation und zum Identifizieren eines zweiten Netzwerk-Slice, der zum Verarbeiten der Netzwerkkommunikation geeignet ist; und
eine Steuerung (210-1) zum Umleiten der Netzwerkkommunikation zum zweiten Netzwerk-Slice, um die Netzwerkkommunikation mittels des zweiten Netzwerk-Slice zu verarbeiten, in Reaktion auf ein Identifizieren einer mangelnden Eignung des ersten Netzwerk-Slice, die Netzwerkkommunikation zu verarbeiten, durch den Prozessor;
**dadurch gekennzeichnet, dass**:
die Steuerung so konfiguriert ist, dass sie das Umleiten durchführt, während die UE dem ersten Netzwerk-Slice zugewiesen bleibt.

14. Computerlesbares Speichermedium, umfassend Anweisungen, die bei Ausführung durch einen Prozessor und eine Steuerung, die mit einem Telekommunikationsnetzwerk (100) assoziiert sind, das Telekommunikationsnetzwerk zum Durchführen des Verfahrens nach einem der Ansprüche 1 bis 12 veranlassen.

## Revendications

1. Procédé de gestion de trafic de réseau dans un réseau de télécommunications (100), le réseau de télécommunications ayant une pluralité de tranches de réseau, un dispositif de commande (210-2), un processeur (210-1) et un Équipement Utilisateur (110), UE, dans lequel l'UE est attribué à une première tranche de réseau (220-1) et l'UE génère une communication de réseau, le procédé comprenant les étapes suivantes :
la surveillance, par le processeur, d'une aptitude de la première tranche de réseau à traiter la communication de réseau (330) ;
l'identification, par le processeur, d'une seconde tranche de réseau (220-2) qui est apte à traiter la communication de réseau (340) ; et
en réponse à l'identification, par le processeur, d'un manque d'aptitude de la première tranche de réseau à traiter la communication de réseau, la redirection, par le dispositif de commande, de la communication de réseau vers la seconde tranche de réseau (350) de façon à traiter la communication de réseau au moyen de la seconde tranche de réseau ;
**caractérisé en ce que** :
ladite redirection est effectuée alors que l'UE reste attribué à la première tranche de réseau.

2. Procédé selon la revendication 1, dans lequel la communication de réseau est redirigée vers la seconde tranche de réseau (220-2) avant qu'elle soit reçue par la première tranche de réseau (220-1).

3. Procédé selon la revendication 1 ou 2, dans lequel l'étape (340) d'identification de la seconde tranche de réseau (220-2) est effectuée en réponse à l'identification d'un manque d'aptitude de la première tranche de réseau.

4. Procédé selon la revendication 3, dans lequel l'identification du manque d'aptitude de la première tranche de réseau (220-1) à traiter la communication de réseau déclenche une reconfiguration de la première tranche de réseau.

5. Procédé selon l'une quelconque des revendications précédentes, dans lequel l'étape d'identification de la seconde tranche de réseau (220-2) est effectuée en réponse à l'identification d'un manque d'aptitude de la première tranche de réseau à traiter la communication de réseau.

6. Procédé selon l'une quelconque des revendications précédentes, dans lequel la communication de réseau pourrait amener, si elle était traitée par la première tranche de réseau (220-1), ou amène effectivement, la première tranche de réseau à devenir inapte à traiter la communication de réseau.

7. Procédé selon l'une quelconque des revendications précédentes, dans lequel la première (220-1) et la seconde (220-2) tranches de réseau restent fonctionnelles pendant, au moins, les étapes de surveillance, d'identification et de redirection.

8. Procédé selon l'une quelconque des revendications précédentes, dans lequel la communication de réseau est redirigée vers au moins une fonction, mais pas vers toutes les fonctions, de la seconde tranche de réseau (220-2) .

9. Procédé selon la revendication 8, dans lequel la communication de réseau est redirigée vers une Fonction de Plan d'Utilisateur, UPF, de la seconde tranche de réseau (220-2).

10. Procédé selon l'une quelconque des revendications précédentes, dans lequel la première tranche de réseau (220-1) est une tranche de réseau qui est préférée par le réseau de télécommunications (100) à la seconde tranche de réseau (220-2) pour traiter la communication de réseau lorsque la première tranche de réseau est apte à traiter la communication de réseau.

11. Procédé selon l'une quelconque des revendications précédentes, dans lequel l'identification de la seconde tranche de réseau (220-2) comprend en outre les étapes suivantes : la mesure des performances de réseau de la seconde tranche de réseau ; et l'évaluation du fait de savoir si les performances de réseau dépassent un seuil.

12. Procédé selon l'une quelconque des revendications précédentes, dans lequel la redirection de la communication de réseau vers la seconde tranche de réseau (220-2) est mise en œuvre dans le coeur (125) du réseau de télécommunications (100).

13. Réseau de télécommunications (100) destiné à gérer le trafic de réseau pour un Équipement Utilisateur (110), UE, le réseau de télécommunications comprenant :
une première tranche de réseau (220-1) et une seconde tranche de réseau (220-2), l'UE étant attribué à la première tranche de réseau et l'UE générant une communication de réseau ;
un processeur (210-2) destiné à surveiller une aptitude de la première tranche de réseau à traiter la communication de réseau et à identifier une seconde tranche de réseau qui est apte à traiter la communication de réseau ; et
un dispositif de commande (210-1) destiné à rediriger la communication de réseau vers la seconde tranche de réseau de façon à traiter la communication de réseau au moyen de la seconde tranche de réseau en réponse à l'identification, par le processeur, d'un manque d'aptitude de la première tranche de réseau à traiter la communication de réseau ;
**caractérisé en ce que** :
ledit dispositif de commande est configuré pour effectuer ladite redirection alors que l'UE reste attribué à la première tranche de réseau.

14. Support de stockage lisible par ordinateur comprenant des instructions qui, lorsqu'elles sont exécutées par un processeur et un dispositif de commande associé à un réseau de télécommunications, amènent le réseau de télécommunications à mettre en œuvre le procédé selon l'une quelconque des revendications 1 à 12.
